# EUROPEAN PATENT SPECIFICATION

(11) **EP 0 835 206 B1**
(45) Date of publication and mention of the grant of the patent: **14.04.1999**
(21) Application number: 96924079.5
(22) Date of filing: 15.07.1996
(51) Int. Cl.: B63H 5/125, B63H 23/30, B63H 23/06, F16H 3/54

(54) **MARINE DRIVE SYSTEM**
ANTRIEBSVORRICHTUNG FÜR BOOTE
SYSTEME D'ENTRAINEMENT NAUTIQUE

(30) Priority: 15.07.1995 GB 9514513
(43) Date of publication of application: 15.04.1998
(73) Proprietor: Advanced Marine Systems Limited, Sunningdale, Berkshire SL5 0LL (GB)
(72) Inventor: SPEPPARD,Lynn John, Bagshot, Surrey GU195LT (GB)
(74) Representative: Wolff, Francis Paul
(86) International application number: GB9601684
(87) International publication number: WO9703876

(56) References cited:
- AU-B- 408 291
- DE-A- 2 544 338
- FR-A- 1 310 217
- GB-A- 874 926
- GB-A- 952 371
- GB-A- 1 156 317
- US-A- 4 850 911

## Description

The present invention is concerned with a marine drive system that incorporates a two speed gearbox in a stern drive power boat.

There are many kinds of marine drive systems known, but considering the common screw propeller drives, power boats can conveniently be classified into displacement boats, with inboard drives, and planing boats, with outboard motors or with stern drives. With inboard drives, as used in displacement boats, the engine and any gearbox are housed in a suitable bay within the hull, the screw is driven by a long propeller shaft extending through the stern, and a separate rudder is provided. With outboard motors, the engine and drive train are entirely outside the hull, and are turned as a unit to steer the boat. Stern drive boats can be seen as hybrids, in that they have outboard drives and inboard motors, with the engine mounted in a small bay just inboard of the transom at the stern, directly driving an external pivoted drive leg through a universal joint arrangement that passes through the transom; the drive leg normally includes forward and reverse gearing at the top of the leg and a reduction gear at the bottom, and is swivelled laterally to steer the boat and tilted to control the planing angle when the boat is at speed.

This invention is intended to provide a step drive for a stern drive boat, that is to say an overdrive or means of providing an alternative higher gear ratio, and moreover a step drive that not only can provide an automatic gear change, but one that can be retrofitted to many existing stern drive boats, without substantially affecting the weight distribution.

The benefits of multiple gear ratios include the facility for using a low gear to manoeuvre the boat and to accelerate to lift it up on to the plane, and then to drop the engine revolutions to immediately reduce fuel consumption, wear, emissions and noise, and to allow a higher top end speed.

Displacement boats with inboard drives and long drive shafts already have ample room to incorporate conventional parallel shaft multispeed gearboxes with forward and reverse drive ratios in the inboard engine bay. This is not the case with planing outboard motor and stern drive boats, with their stern mounted engines. These generally only find room in the drive leg to accommodate simple forward and reverse gearing. Exceptions are known, but tend to limit the tilting of the drive leg. US Patent 4 850 911 is an example of one attempt to overcome this problem in a stern drive boat, without limiting drive leg movement, by fitting a gearbox at the rear of the drive leg, behind the vertical shaft that drives the submerged propeller shaft, using a concentric sleeved combined input and output shaft to the rearwardly mounted gearbox, and locating the forward/reverse gearchange between the vertical drive shaft and the propeller shaft.

Another desirable feature for a marine drive would include a fail-safe design, so that in the event of a failure of the automatic actuating mechanism, the drive would continue to function.

The present invention concerns aspects of the marine drive described below. The scope of the invention extends to all novel aspects of the drive whether individually or in combination with any of the other features disclosed herein.

According to the invention, a marine drive system comprises the elements and features disclosed in the appended claims.

More specifically, in one aspect of the invention, we have found it possible to include a gearbox with an alternative gear ratio in a stern drive boat inboard, between the engine and the drive leg. In this way an existing drive leg may be used, and the gearbox and any associated controls, especially electrical controls, are protected from external water, which is often corrosive salt water. Accordingly, the invention includes a transmission for a stern drive boat having an engine inboard of and adjacent to the stern of the boat and connected through the stern of the boat by means of a universal coupling to a steerable outboard drive leg, comprising an epicyclic gearbox mounted in use inboard on the rear of the engine, having an engine driven gearbox input shaft drivingly connected to a gearbox output shaft in at least two alternative selectable gear ratios, and the output shaft connected to the universal coupling.

Preferably, the lowest of the said ratios is permanently connected to the output shaft by a one-way clutch. Higher ratios will cause the output shaft to rotate faster than the input shaft, and the said lowest ratio may be a direct drive ratio, so that the gearbox is an overdrive gearbox. In this last case in particular, gearbox failure will be expected to result in the transmission reverting to, or remaining in, direct drive.

In a preferred transmission the gearbox is an epicyclic gearbox, which may comprise coaxial input and output shafts in a housing, a sun pinion mounted over the input shaft and freely rotatable with respect thereto, a planet pinion carrier mounted on the input shaft and rotatable therewith, at least one planet pinion carried by the carrier in engagement with the sun pinion, an annulus carrying an internally toothed ring gear drivingly connected between the planet pinion and the output shaft, and brake means adapted to selectively brake the sun pinion either with respect to the housing or with respect to the ring gear.

The planet pinion may be a composite pinion, having a first pinion element of a first diameter engaged with the sun pinion and a second coaxial pinion element of a second diameter engaged with the ring gear, to reduce the overall dimensions for a given gear ratio. The sun pinion may be solid with an externally splined sleeve that is rotatable over the input shaft, and the brake (or clutch) means may comprise a friction disk splined to the sleeve and axially slideable along it between a first position in which it frictionally engages the annulus and a second position in which it frictionally engages the housing.

Gear change operating means for sliding the brake disk may comprise an actuating rod connected to the brake disk by a bi-directional thrust bearing, and cam means operatively connected to the actuating rod. The cam means may be located between cam followers connected to the actuating rod for urging the rod in alternative directions according to the rotation of the cam means.

A preferred transmission includes gear change control means for automatically selecting the gear ratios in response to engine speed. The gear change control means may be operative to change the gear to a lower gear ratio on detecting a fall in engine speed past a first predetermined value and to change the gear to a higher gear ratio on detecting a rise in engine speed past a second predetermined value. The second value may be the same as the first, but in practice it should be greater than the first, to reduce the risk of the gearbox switching endlessly between two ratios. To avoid this entirely, the ratio of the second value to the first value should be greater than the ratio of the low gear ratio to the high gear ratio. Generally, there is very little propeller slip in modern designs, so a change of gear ratio at a given water speed will primarily change the engine speed to match the new ratio.

There may of course be gear change control means which does not operate automatically, being subject to driver selection and control. In any event, control means may also operate to prevent engagement of a higher gear ratio unless the engine speed is greater than a third predetermined value, which may be the same as the second value.

The transmission may comprise forward and reverse gear selection means in the outboard drive leg, as in conventional stern drives, and means for inhibiting the selection of a higher gear when a reverse gear is selected.

The invention extends to a stern drive boat according to claim 15 comprising such a transmission; and to a method according to claim 16 of converting a stern drive boat transmission, of the kind having a rear engine drive housing extending between engine and transom and an engine output shaft therein directly connected to a universal coupling for an outboard drive leg, to include a plurality of selectable forward gear ratios, comprising removing the said output shaft and housing and replacing them with a transmission as set out in any of the claims 1-14.

The invention is illustrated, by way of example, in the accompanying drawings, in which:
Figure 1 shows a sectional view of part of a conventional prior art stern drive planing power boat, with an inboard engine and an outboard drive leg;
Figure 2 is a corresponding view of the same boat converted to a two forward gear ratio transmission in accordance with the invention;
Figure 3 is a sectional view through a gearbox of the kind shown in Figure 2; and
Figure 4 is an illustration of the control system for the illustrated marine drive.

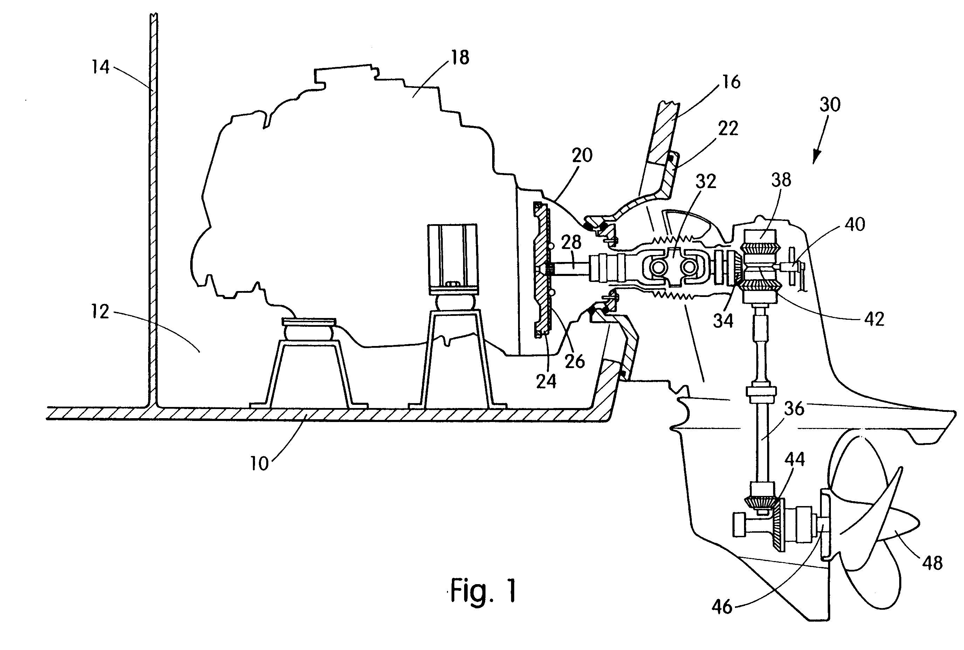

Figure 1 shows a boat hull 10 at the stern of which is a small engine bay 12 between a forward bulkhead 14 and a transom 16. The engine bay is almost wholly occupied by a diesel or petrol engine 18. The flywheel 24 is enclosed in a bell housing 20 that functions as a rear engine seal and adapter to a transom shield 22, that seals with both the housing and the transom. Inside the bell housing 20, the flywheel carries a torque plate 26 that drives engine output shaft 28.

Outboard of the transom shield 22 is a tilting and pivoting drive leg 30. This extends from the rear of the housing 20, and contains the remainder of the drive train, including coupling 32, inside a protective rubber gaiter, comprising a double universal joint driven by the engine drive shaft 28, a bevel gear pinion 34, and a vertical drive shaft 36 with a splined sleeve 38 at its upper end carrying forward and reverse bevel gears, either of which can be selectively engaged with pinion 34 by the movement of selector cone 40 that rides in circumferential groove 42 in the sleeve, to raise or lower the sleeve on the vertical shaft. The intermediate position, in which neither forward nor reverse is engaged, is neutral.

At the lower end of the vertical shaft a further bevel reduction gear 44 drives propeller shaft 46 carrying screw propeller 48 with a reduction gearing of, for example, 1.80:1 or 1.95:1.

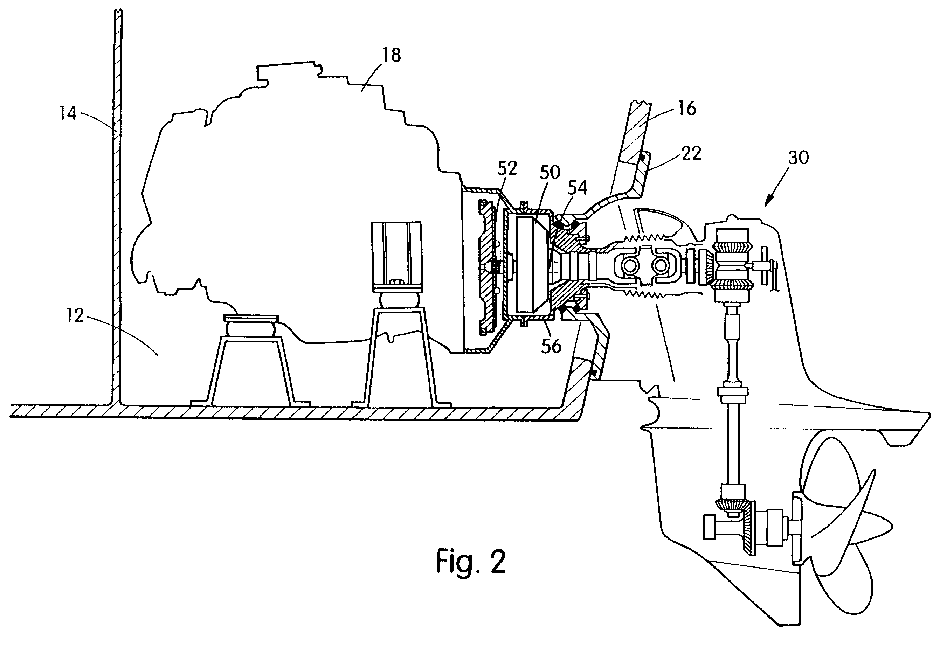

In Figure 2, unchanged parts are given the same reference numbers. The engine output shaft 28 and housing 20 of the conventional transmission are removed and replaced with a shortened shaft 52 serving as the input shaft to an automatic epicyclic gearbox 50 having a coaxial output shaft 54 to the universal coupling 32, the gearbox and its input and output shafts all being contained within a housing 56 that is only some 50mm longer overall than housing 20. A small forward shift of engine 18 in engine bay 12 can accommodate this without substantially affecting the balance and handling of the boat. No major restructuring of the engine bay or shifting of the bulkhead 14 are needed, and the mobility of the outboard drive is unaffected.

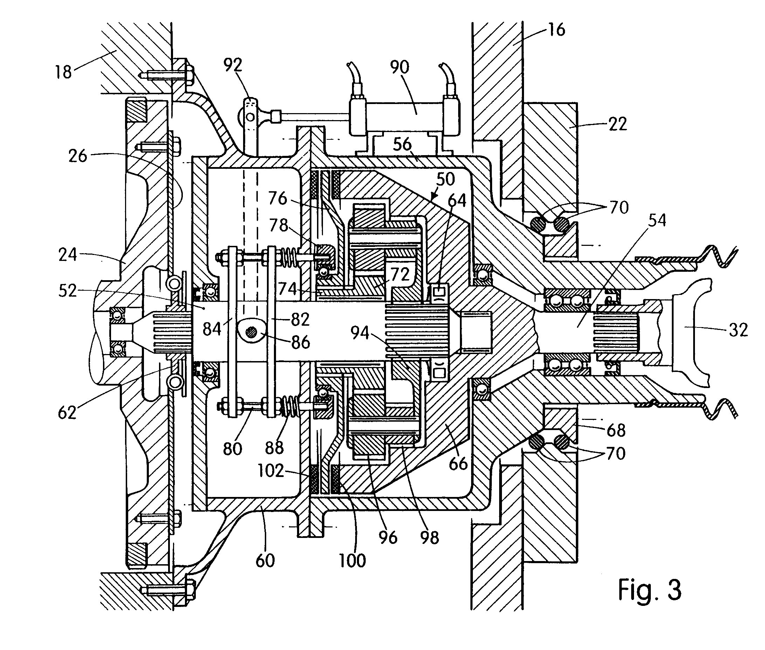

Figure 3 shows the epicyclic gearbox 50 in some detail. It is located in a housing 56 that is mounted on the rear of engine 18 by means of a flywheel adapter ring 60 enclosing flywheel 24 and torque plate 26. Gearbox input shaft 52 is journalled at one end in the flywheel centre, is driven from the sprung centre 62 of the torque plate through which it passes, and at its other end is supported in the centre of annulus 66 by unidirectional clutch 64.

The annulus is solid with or coaxially connected to gearbox output shaft 54, journalled in the tail of housing 56 and sealed against oil loss and water entry at its connection with coupling 32.

Conventional clamping collar 68 compresses rubber seals 70 between the collar, the transom shield 22 and a conical rear face of the gearbox housing 56, and so firmly holds the tail of the gearbox in the transom.

The one way clutch 64 is sufficient to transmit engine power to the drive leg in direct gear, but to provide a step-up higher gear ratio an epicyclic gear set is provided.

A sun pinion 72 is concentrically mounted over the input shaft, over which it is freely rotatable. A sleeve 74 extends forwardly from the sun pinion and is externally splined. It carries the splined centre of a clutch or brake disk 76 which is axially slideable along the sleeve by a bi-directional thrust bearing 78 that carries four equally spaced actuating rods 80 that pass slideably through the front wall of housing 56 into space inside adapter ring 60.

A pair of cam follower plates 82, 84 are locked to each pair of actuating rods on each side of the gearbox input shaft, and a cam and camshaft 86 between the cam followers on each side can rotate to move the actuating rods and hence the brake disk between a first rearward position and a second forward position along sleeve 74 according to the direction of rotation of the camshaft. Coil springs 88 on the actuating rods tend to assist forward movement, but are insufficiently strong to cause forward movement by turning the camshaft.

The camshaft is turned by double acting hydraulic cylinder 90 linked to camshaft operating levers 92 on each side of the gearbox housing. Oil for the cylinder is provided in a conventional manner by a solenoid controlled electric pump.

The rearward end of input shaft 52 is externally splined to engage with both the unidirectional clutch 64 and a planet gear carrier 94. Planet gears 96, four in number spaced equally around the input shaft, are composite or stepped pinions consisting of a larger diameter pinion element engaged with the sun pinion and a smaller diameter pinion element engaged with an internally toothed ring gear 98 formed inside the annulus 66.

In its first rearward position on sun pinion sleeve 74, the brake disk 76 frictionally engages a brake surface 100 on the annulus 66, causing the sun pinion to rotate with the annulus and effectively locking the epicyclic gear assembly so that the input and output shafts rotate together at the same speed with no relative movement. This is a direct drive ratio.

In its second forward position on the sun pinion sleeve, the brake disk frictionally engages a brake surface 102 on the gearbox housing, causing the sun pinion to stop rotating and remain stationary. This means that the planet gear carrier 94 must rotate about the sun wheel. The various gear diameters for the sun pinion, for the two steps of the planet pinions and for the ring gear, are chosen so that the annulus and output shaft are driven 20% to 30% faster, for example 22% or 27% faster, than the input shaft.

Springs 88 are provided because it normally requires more force to hold the sun pinion stationary with the housing than to hold it stationary with the annulus.

Figure 3 shows the brake disk 76 in an intermediate position, mainly for clarity, although in practice the brake is engaged either with the housing or with the annulus. However, it can be seen from this drawing that even if the epicyclic gearing or its controls failed entirely, there would still be a direct drive through one-way clutch 64, except in the unlikely event of this component failing simultaneously.

If there were no locking of the sun pinion to the annulus in direct drive, the one-way clutch would allow an overrun or a free-wheel effect on slowing the engine. Since the driver will rely on the braking effect of the slowing propeller to brake the boat in the water, the rearward position of the brake disk ensures proper speed control of the boat in both gear ratios.

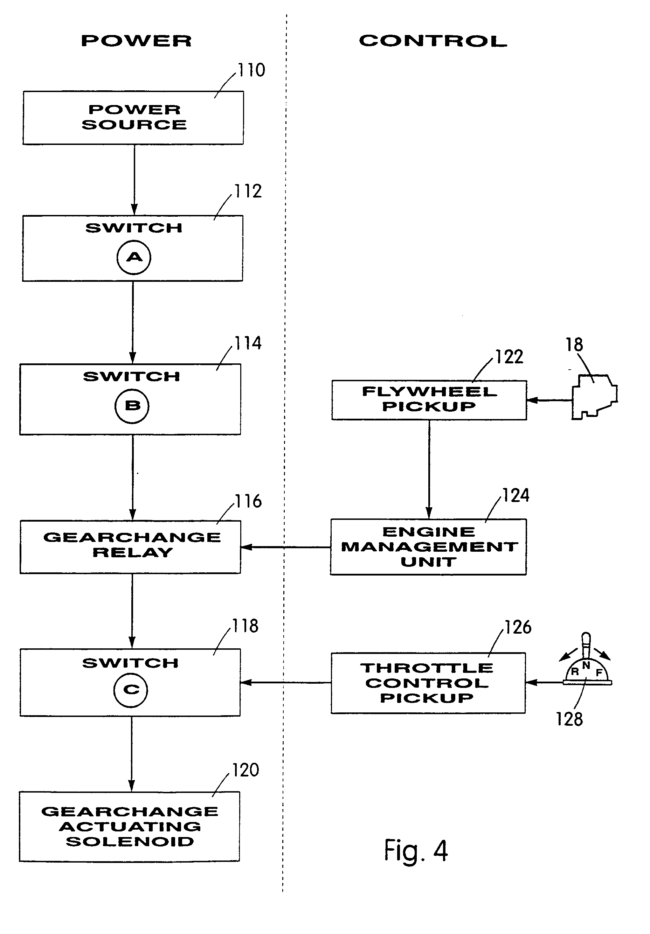

Figure 4 illustrates the electrical power and control system diagrammatically. On the power side, the source 110 is the usual rechargeable on-board battery with fuse protection to the circuit. Switch 112 is the main engine ignition switch which exercises primary control. Switch 114 is a supplementary switch by which the driver can select whether or not to allow the automatic gearchange to operate. If it does not operate, then direct drive is always engaged. Gearchange relay 116 under the control of engine management unit 124 may then supply power to change to a high ratio gear to a gearchange actuating solenoid 120, subject to isolating switch 118 which isolates the solenoid when reverse gear is engaged, for safety reasons. The solenoid activates the oil pump for cylinder 90.

Isolating switch 118 is controlled by a pickup 126 on throttle control 128, which controls forward, neutral and reverse gear selection in the drive leg 30 as well as engine speed.

The control side also includes a flywheel pickup 122 detecting engine speed and supplying this data to the engine management unit. Pre-programmed trip speeds for gear changes to a higher ratio may be an increase in speed above 3000rpm to 3700rpm, and trip speeds for changes to a lower ratio may be a decrease in speed below 2000rpm to 2500rpm. The gear ratios may imply a decrease in engine speed of from 1000 to 1200rpm when high gear is engaged.

The engine management unit may be programmed simply to inhibit overdrive selection below a certain engine speed, leaving the driver to elect when to change gear above that speed, by the use of a simple rocker or other switch on the dashboard or adjacent the throttle control.

Power can be transmitted from the gearbox output shaft to the propeller in a number of ways and is not restricted to the manner illustrated. Further, the invention can be applied to multiple engined boats; each engine will normally have its own transmission, and the transmissions will be electrically coupled so that the gear ratios are always synchronised. If one step-up gear system should fail, the others will be inhibited.

## Claims

1. A transmission for a stern drive planing boat having an engine inboard of and adjacent to the stern of the boat (10) and connected through the stern of the boat by means of a universal coupling (32) to a steerable outboard propeller drive leg (30), comprising an epicyclic gearbox (50) mounted in use inboard on the rear of the engine (18), having an engine driven gearbox input shaft (52) drivingly connected to a gearbox output shaft (54) in two alternative selectable forward gear ratios, and the output shaft (54) connected to the universal coupling (32).

2. A transmission according to claim 1 wherein one end of the gearbox input shaft (52) is journalled in the centre of the engine flywheel (24).

3. A transmission according to claim 1 or claim 2 wherein the gearbox input shaft (52) is directly connected to the rear of the engine (18) by means of a torque plate (26) on a flywheel (24).

4. A transmission according to any one of the preceding claims wherein the lower of the said ratios is connected to the output shaft (54) by a one-way clutch (64).

5. A transmission according to any one of the preceding claims wherein the lower of the said ratios is a direct drive ratio.

6. A transmission according to any one of the preceding claims wherein the epicyclic gearbox comprises coaxial input (52) and output (54) shafts in a housing (56), a sun pinion (72) mounted over the input shaft (52) and freely rotatable with respect thereto, a planet pinion carrier (94) mounted on the input shaft (52) and rotatable therewith, at least one planet pinion (96) carried by the carrier in engagement with the sun pinion (72), an annulus (66) carrying a ring gear (98) drivingly connected between the planet pinion (96) and the output shaft (54), and brake means (76) adapted to selectively brake the sun pinion (72) either with respect to the housing (56) or with respect to the ring gear (98).

7. A transmission according to claim 6 wherein the planet pinion (96) is a composite pinion, having a first pinion element of a first diameter engaged with the sun pinion (72) and a second coaxial pinion element of a second diameter engaged with the ring gear (98).

8. A transmission according to claim 6 or claim 7 wherein the sun pinion (72) is solid with an externally splined sleeve (74) that is rotatable over the input shaft (52), and the brake means (76) comprises a friction disk splined to the sleeve and axially slideable along it between a first position in which it frictionally engages the annulus (66) and a second position in which it frictionally engages the housing (56).

9. A transmission according to any one of the preceding claims including gear change control means (124) for inhibiting the selection of the higher gear ratio below a predetermined engine speed.

10. A transmission according to any one of the preceding claims including gear change control means (124) for automatically selecting the gear ratios in response to engine speed.

11. A transmission according to claim 10 wherein the gear change control means is operative to change the gear to the lower gear ratio on detecting a fall in engine speed past a first predetermined value and to change the gear to the higher gear ratio on detecting a rise in engine speed past a second predetermined value, the second value being greater than the first value.

12. A transmission according to claim 11 wherein the ratio of the second value to the first value is greater than the ratio of the low gear ratio to the high gear ratio.

13. A transmission according to any one of the preceding claims comprising forward and reverse gear selection means (128) in the outboard drive leg (30).

14. A transmission according to any one of the preceding claims comprising means (118) for inhibiting the selection of the higher gear when a reverse gear is selected.

15. A stern drive planing boat comprising a transmission according to any one of the preceding claims.

16. A method of converting a stern drive planing boat transmission, of the kind having a rear engine drive housing extending between engine and transom and an engine output shaft therein directly connected to a universal coupling for a steerable outboard propeller drive leg, to include two selectable forward gear ratios, comprising removing the said output shaft and housing and replacing them with a transmission according to any one of claims 1 to 14.

## Patentansprüche

1. Kraftübertragungsorgan für ein heckangetriebenes Gleitboot, welches einen Motor aufweist, der bezüglich des Hecks des Bootes (10) binnenbords sowie an dieses angrenzend angeordnet ist und der durch das Heck des Bootes hindurch mittels einer Gelenkkupplung (32) mit einem steuerbaren, außenbords vorgesehenem Schraubenantriebsbein (30) verbunden ist, umfassend ein im Gebrauch binnenbords an der Hinterseite des Motors (18) montiertes Planetengetriebe (50), welches eine von dem Motor angetriebene Getriebeeingangswelle (52) aufweist, die in zwei alternativen, auswählbaren Vorwärtsübersetzungsverhältnissen mit einer Getriebeausgangswelle (54) antriebsverbunden ist, wobei die Ausgangswelle (54) mit der Gelenkkupplung (32) verbunden ist.

2. Kraftübertragungsorgan nach Anspruch 1,
**dadurch gekennzeichnet, dass**
ein Ende der Getriebeeingangswelle (52) in der Mitte des Motorschwungrades (24) gelagert ist.

3. Kraftübertragungsorgan nach Anspruch 1 oder Anspruch 2,
**dadurch gekennzeichnet, dass**
die Getriebeeingangswelle (52) mittels einer an einem Schwungrad (24) vorgesehenen Drehmomentplatte (26) direkt mit der Hinterseite des Motors (18) verbunden ist.

4. Kraftübertragungsorgan nach einem der vorangehenden Ansprüche,
**dadurch gekennzeichnet, dass**
die Ausgangswelle (54) mittels einer Einwegkupplung (64) mit dem geringeren der Übersetzungsverhältnisse beaufschlagt wird.

5. Kraftübertragungsorgan nach einem der vorangehenden Ansprüche,
**dadurch gekennzeichnet, dass**
das geringere der Übersetzungsverhältnisse ein Direktantriebsübersetzungsverhältnis ist.

6. Kraftübertragungsorgan nach einem der vorangehenden Ansprüche,
**dadurch gekennzeichnet, dass**
das Planetengetriebe eine Eingangs- (52) und eine Ausgangswelle (54), welche koaxial in einem Gehäuse (56) angeordnet sind, ein Sonnenrad (72), welches um die Eingangswelle (52) herum angeordnet und bezüglich dieser frei drehbar ist, einen Planetenradträger (94), welcher auf der Eingangswelle (52) montiert ist und sich mit dieser mitdreht, wobei wenigstens ein von dem Träger getragenes Planetenrad (96) in Eingriff mit dem Sonnenrad (72) steht, einen ein Hohlrad (98) tragenden Ring (66), der als Antriebsverbindung zwischen dem Planetenrad (96) und der Ausgangswelle (54) angeordnet ist, und eine Bremseinrichtung (76) aufweist, welche das Sonnenrad (72) wahlweise entweder bezüglich des Gehäuses (56) oder bezüglich des Hohlrades (98) bremsen kann.

7. Kraftübertragungsorgan nach Anspruch 6,
**dadurch gekennzeichnet, dass**
das Planetenrad (96) ein Verbundzahnrad ist, welches ein erstes Zahnradelement mit einem ersten Durchmesser, welches in das Sonnenrad (72) eingreift, und ein zweites koaxiales Zahnradelement mit einem zweiten Durchmesser, welches in das Hohlrad (98) eingreift, aufweist.

8. Kraftübertragungsorgan nach Anspruch 6 oder Anspruch 7,
**dadurch gekennzeichnet, dass**
das Sonnenrad (72) einteilig mit einer außen verzahnten Hülse (74) ausgebildet ist, welche sich um die Eingangswelle (52) drehen kann, und die Bremseinrichtung (76) eine Reibscheibe aufweist, welche mit der Hülse verzahnt ist und axial entlang dieser zwischen einer ersten Stellung, in welcher sie reibschlüssig an den Ring (66) angreift, und einer zweiten Stellung, in welcher sie reibschlüssig an das Gehäuse (56) angreift, verschiebbar ist.

9. Kraftübertragungsorgan nach einem der vorangehenden Ansprüche,
**dadurch gekennzeichnet, dass**
eine Gangwechselsteuereinrichtung (124) zum Hemmen der Auswahl des höheren Übersetzungsverhältnisses unterhalb einer vorgegebenen Motordrehzahl vorgesehen ist.

10. Kraftübertragungsorgan nach einem der vorangehenden Ansprüche,
**dadurch gekennzeichnet, dass**
eine Gangwechselsteuereinrichtung (124) zum automatischen Auswählen der Übersetzungsverhältnisse in Abhängigkeit von der Motordrehzahl vorgesehen ist.

11. Kraftübertragungsorgan nach Anspruch 10,
**dadurch gekennzeichnet, dass**
die Gangwechselsteuereinrichtung den Gang auf das geringere Übersetzungsverhältnis schaltet, wenn ein Abfall der Motordrehzahl auf einen Wert unterhalb eines ersten vorgegebenen Wertes detektiert wird, und den Gang auf das höhere Übersetzungsverhältnis schaltet, wenn ein Anstieg der Motordrehzahl auf einen Wert über einen zweiten vorgegebenen Wert detektiert wird, wobei der zweite Wert größer ist als der erste Wert.

12. Kraftübertragungsorgan nach Anspruch 11,
**dadurch gekennzeichnet, dass**
das Verhältnis des zweiten Werts zu dem ersten Wert größer ist als das Verhältnis des geringen Übersetzungsverhältnisses zu dem hohen Übersetzungsverhältnis.

13. Kraftübertragungsorgan nach einem der vorangehenden Ansprüche,
**dadurch gekennzeichnet, dass**
in dem Außenbordantriebsbein (30) eine Vorwärts- und Rückwärtsgangwähleinrichtung (128) vorgesehen ist.

14. Kraftübertragungsorgan nach einem der vorangehenden Ansprüche,
**dadurch gekennzeichnet, dass**
eine Einrichtung (118) vorgesehen ist, welche die Auswahl des höheren Ganges hemmt, wenn ein Rückwärtsgang gewählt ist.

15. Heckangetriebenes Gleitboot, umfassend ein Kraftübertragungsorgan nach einem der vorangehenden Ansprüche.

16. Verfahren zum Umwandeln eines Kraftübertragungsorgans eines heckangetriebenen Gleitbootes, welches ein hinteres Motorantriebsgehäuse aufweist, das sich zwischen dem Motor und einer Wrange erstreckt und in welchem eine Motorausgangswelle direkt mit einer Gelenkkupplung für ein steuerbares, außenbords angeordnetes Schraubenantriebsbein verbunden ist, in ein solches Kraftübertragungsorgan, welches zwei auswählbare Vorwärtsübersetzungsverhältnisse aufweist, umfassend das Entfernen der Ausgangswelle und des Gehäuses sowie ihr Ersetzen durch ein Kraftübertragungsorgan nach einem der Ansprüche 1 bis 14.

## Revendications

1. Transmission pour un hydroglisseur à entraînement en poupe ayant un moteur interne et adjacent à la poupe de l'hydroglisseur (10) et relié au travers de la poupe de l'hydroglisseur, au moyen d'un accouplement universel (32), à une jambe d'entraînement d'hélice hors bord orientable (30), comprenant une boîte de vitesses à train épicycloïdal (50) montée en utilisation à bord sur l'arrière du moteur (18), comportant un arbre (52) d'entrée de boîte de vitesses entraîné par le moteur et relié pour l'entraînement à un arbre (54) de sortie de boîte de vitesses selon deux rapports de vitesses d'entraînement vers l'avant sélectionnables alternativement, l'arbre de sortie (54) étant relié à l'accouplement universel (32).

2. Transmission selon la revendication 1, dans laquelle une extrémité de l'arbre (52) d'entrée de boîte de vitesses est reçue dans le centre du volant de moteur (24).

3. Transmission selon la revendication 1 ou 2, dans laquelle l'arbre (52) d'entrée de boîte de vitesses est relié directement à l'arrière du moteur (18) au moyen d'une plaque de couple (26) sur un volant (24).

4. Transmission selon l'une quelconque des revendications précédentes, dans laquelle le rapport inférieur desdits rapports est relié à l'arbre de sortie (54) par un embrayage unidirectionnel (64).

5. Transmission selon l'une quelconque des revendications précédentes, dans lequel le rapport inférieur desdits rapports est un rapport d'entraînement direct.

6. Transmission selon l'une quelconque des revendications précédentes, dans laquelle la boîte de vitesses à train épicycloïdal comprend des arbres d'entrée (52) et de sortie (54) coaxiaux dans un boîtier (56), un pignon planétaire (72) monté sur l'arbre d'entrée (52) et pouvant tourner librement par rapport à celui-ci, un support de pignon satellite (94) monté sur l'arbre d'entrée (52) et pouvant tourner avec celui-ci, au moins un pignon satellite (96) porté par le support de manière à coopérer avec le pignon planétaire (72), une couronne (66) portant un anneau denté (98) relié pour l'entraînement entre le pignon satellite (96) et l'arbre de sortie (54), et des moyens (76) de freinage adaptés pour freiner sélectivement le pignon planétaire (72) soit par rapport au boîtier (56) soit par rapport à l'anneau denté (98).

7. Transmission selon la revendication 6, dans laquelle le pignon satellite (96) est un pignon composite, comprenant un premier élément de pignon d'un premier diamètre coopérant avec le pignon planétaire (72) et un deuxième élément de pignon coaxial d'un deuxième diamètre et coopérant avec l'anneau denté (98).

8. Transmission selon la revendication 6 ou 7, dans laquelle le pignon planétaire (72) est lié fixement avec un manchon cannelé extérieurement (74) qui peut tourner sur l'arbre d'entrée (52), et les moyens (76) de freinage comprennent un disque de friction coopérant par cannelures avec le manchon et qui peut coulisser axialement le long de celui-ci entre une première position dans laquelle il coopère par friction avec la couronne (66) et une deuxième position dans laquelle il coopère par friction avec le boîtier (56).

9. Transmission selon l'une quelconque des revendications précédentes, comprenant des moyens (124) de commande de changement de vitesse pour empêcher la sélection du rapport de vitesse supérieur en dessous d'une vitesse de moteur prédéterminée.

10. Transmission selon l'une quelconque des revendications précédentes, comprenant des moyens (124) de commande de changement de vitesse pour sélectionner automatiquement les rapports de vitesse en réponse à la vitesse du moteur.

11. Transmission selon la revendication 10, dans laquelle les moyens de commande de changement de vitesse sont utilisables pour changer la vitesse vers le rapport de vitesse inférieur lors de la détection d'une diminution de la vitesse du moteur sous une première valeur prédéterminée et pour changer la vitesse vers le rapport de vitesse supérieur lors de la détection d'une élévation de la vitesse du moteur au-delà d'une deuxième valeur prédéterminée, la deuxième valeur étant supérieure à la première valeur.

12. Transmission selon la revendication 11, dans laquelle le rapport de la deuxième valeur sur la première valeur est supérieur au rapport du rapport de vitesse inférieur sur le rapport de vitesse supérieur.

13. Transmission selon l'une quelconque des revendications précédentes, comprenant des moyens (128) de sélection de vitesses avant et arrière dans la jambe d'entraînement hors bord (30).

14. Transmission selon l'une quelconque des revendications précédentes, comprenant des moyens (118) pour empêcher la sélection de la vitesse supérieure lorsqu'une vitesse arrière est sélectionnée.

15. Hydroglisseur à entraînement en poupe comprenant une transmission selon l'une quelconque des revendications précédentes.

16. Procédé pour convertir une transmission d'hydroglisseur à entraînement en poupe, du type ayant un boîtier de moteur d'entraînement arrière s'étendant entre le moteur et une traverse et un arbre de sortie de moteur dans celle-ci directement relié à un accouplement universel pour une jambe d'entraînement d'hélice hors bord orientable, pour présenter deux rapports de vitesse avant sélectionnables, comprenant l'enlèvement dudit arbre de sortie et dudit boîtier et leur remplacement par une transmission selon l'une quelconque des revendications 1 à 14.
